# EUROPÄISCHE PATENTSCHRIFT

(11) **EP 3 088 782 B1**
(45) Veröffentlichungstag und Bekanntmachung des Hinweises auf die Patenterteilung: **18.09.2019**
(21) Anmeldenummer: 15165659.2
(22) Anmeldetag: 29.04.2015
(51) Int. Cl.: F16K 31/14, F16K 35/04, F15B 13/04, F16K 3/24, F16K 3/32, F16K 11/07

(54) **HYDRAULISCHES STEUERVENTIL IN SCHIEBERBAUWEISE UND MOBILHYDRAULIK MIT ENTSPRECHENDEM STEUERVENTIL**
HYDRAULIC CONTROL VALVE IN GATE CONSTRUCTION AND MOBILE HYDRAULICS WITH ASSOCIATED CONTROL VALVE
VANNE DE COMMANDE HYDRAULIQUE EN CONSTRUCTION À COULISSE ET INSTALLATION HYDRAULIQUE MOBILE DOTÉE D'UNE VANNE DE COMMANDE CORRESPONDANTE

(43) Veröffentlichungstag der Anmeldung: 02.11.2016
(73) Patentinhaber: HAWE Hydraulik SE, 85609 Aschheim (DE)
(72) Erfinder: Hörfurtner, Felix, 83109 Großkarolinenfeld (DE); Rümenap, Sascha, 86368 Gersthofen (DE)
(74) Vertreter: Grosse Schumacher Knauer von Hirschhausen

(56) Entgegenhaltungen:
- EP-A1- 2 333 390
- DE-A1- 2 251 634
- DE-A1- 2 726 341
- DE-A1- 4 130 638
- DE-B- 1 090 133
- DE-B3-102006 052 550
- DE-U1- 20 216 823
- GB-A- 524 702
- US-A1- 2012 067 444
- US-A1- 2012 234 400

## Beschreibung

Die vorliegende Erfindung betrifft allgemein hydraulische Steuerventile ausgebildet in Schieberbauweise mit einem Schieberkolben, dessen Hub in einem Gehäuse entlang einer Hubrichtung in wenigstens einem ersten Betriebsmodus und einem zweiten Betriebsmodus einstellbar ist, und eine Mobilhydraulik mit einem entsprechenden Steuerventil und einem Hydroverbraucher.

In Schieberbauweise ausgeführte hydraulische Steuerventile werden zum Betrieb von Hydroverbrauchern in einer Vielzahl von Anwendungen eingesetzt, wie z.B. unter anderem zum Ein-, Ausfahren und Schwenken von Drehleitern oder Teleskopmasten bei Hubrettungsfahrzeugen. In weiteren Beispielen werden hydraulische Steuerventile auch u.a. in Antrieben von Abstützsystemen zur Abstützung von Lastfahrzeugen eingesetzt.

Bei Hubrettungsfahrzeugen sind für gewöhnlich hydraulische Steuerventile im hydraulischen Nebenantrieb vor Hydroverbrauchern angeordnet, die Drehleitern, Teleskopmasten, Abstützsysteme oder dergleichen antreiben. Durch die hydraulischen Steuerventile wird dabei ein von einer Hydraulikpumpe erzeugter Ölstrom zum Hydroverbraucher gesteuert, so dass ein Verschwenken, Ausfahren und Einfahren von Drehleitern, Teleskopmasten und Abstützsystemen ausgeführt werden kann. Die Hydraulikpumpe kann z.B. über einen Nebenantrieb von einem Fahrzeugmotor eines Fahrzeugs angetrieben werden. Nach Zuschaltung des Nebenantriebs wird hierbei von der Hydraulikpumpe ein Ölstrom mit geringem Volumen erzeugt, der häufig über eine drucklose Rücklaufleitung umgewälzt wird. Beim Einleiten eines Abstützvorgangs kann z. B. die Drehzahl des Fahrzeugmotors, und damit die Drehzahl der angekoppelten Hydraulikpumpe, an einem Steuerstand am Fahrzeug erhöht werden, wodurch die umgewälzte Ölmenge ansteigt. Zum Ausfahren von Abstützungen wird der Ölstrom dann über das hydraulische Steuerventil zu den Abstützungen geleitet, wo es in Hydraulikzylinder von Ausschubträgern bzw. in Ausschubzylindern von Stützbalken strömt und diese auf eine vorbestimmte Stützbreite ausfährt. Nach Abschluss eines Abstützvorgangs wird ein Ölstrom zum Antrieb von Drehleitern oder Teleskopmasten entsprechenden Arbeitszylindern zugeführt. Auch hier wird der Ölstrom zum entsprechenden Arbeitszylinder bzw. zu den entsprechenden Arbeitszylindern durch Steuerventile gesteuert, um Ausfahr-, Einfahr- und/oder Schwenkgeschwindigkeiten zu steuern.

In herkömmlichen Anwendungen sind die Steuerventile als Proportionalwegeschieber ausgebildet, wobei ein Volumenstrom durch das Steuerventil über eine Steuerkante im Steuerventil gesteuert wird bzw. ein vom Steuerventil ausgegebener Volumenstrom proportional zum Hub eines Schieberkolbens im Steuerventil einstellbar ist.

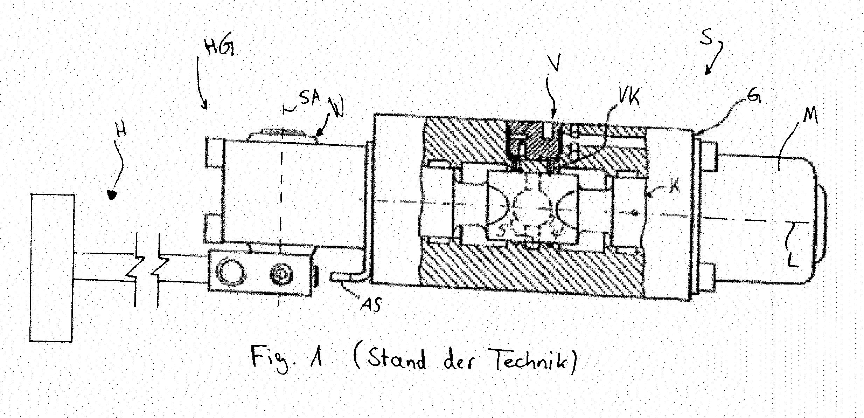

Fig. 1 zeigt ein bekanntes hydraulisches Steuerventil S, das als Proportionalwegeschieber ausgebildet und in der Offenlegungsschrift DE 44 23 583 A1 beschrieben ist. Das hydraulische Steuerventil S gemäß Fig. 1 weist ein blockförmiges Gehäuse G mit einer in Längsrichtung L durch das Gehäuse G verlaufenden Gehäusebohrung auf, in der ein Schieberkolben K entweder durch einen Handhebel H oder einen Proportionalmagneten M oder eine hydraulische Vorsteuerung V aus einer Absperr- oder Neutralstellung heraus, in der ein Volumenstrom durch das Steuerventil S Null beträgt, in mindestens einer Richtung verstellbar ist. Senkrecht zur Darstellungsebene ist ein Druckanschluss vorgesehen, der von einer kreisrunden Vertiefung 4' im Gehäuse gebildet wird. Eine weitere kreisrunde Vertiefung (nicht dargestellt) ist der Vertiefung 4' im Gehäuse G diametral gegenüberliegend angeordnet, wodurch ein Ausgangsanschluss (nicht dargestellt) des Steuerventils S bereitgestellt wird. Die Vertiefung 4' ist mit der diametral gegenüberliegenden Vertiefung (nicht dargestellt) über eine in Umfangsrichtung des Schieberkolbens K verlaufende Nut 5' verbunden. Hierbei weist die Nut 5' in Umfangsrichtung des Schieberkolbens K eine Unterbrechung auf, in deren Bereich durch die Zusammenarbeit zwischen der zylindrischen Umfangsoberfläche des Schieberkolbens K und einer Wandung des Gehäuses G eine lokale Gleitdichtzone gebildet wird. Dabei nimmt die Tiefe der Nut 5' zweckmäßigerweise zur Unterbrechung hin auf Null ab. Es werden somit der Druckanschluss und der Ausgangsanschluss des Steuerventils S je nach Auslenkung des Schieberkolbens K um die in Fig. 1 dargestellte Absperr- oder Neutralstellung herum miteinander verbunden, wodurch ein Volumenstrom vom Druckanschluss des Steuerventils S zum Ausgangsanschluss des Steuerventils S hubabhängig eingestellt wird. Die hubabhängige Einstellung des Volumenstroms erfolgt über die Tiefenabnahme der Nut 5' zur Unterbrechung hin, durch die eine Regelkante des Steuerventils S gebildet wird.

Der Hub des Schieberkolbens K im Gehäuse G kann nun je nach Betriebsmodus durch den Handhebel H, den Proportionalmagneten M oder durch eine hydraulische Vorsteuerung V eingestellt werden. Die hydraulische Vorsteuerung V weist dabei einen Vorsteuerkanal VK auf, durch den ein an den Vorsteuerkanal VK anstehender Steuerdruck zum Ansteuern des Schieberkolbens K im Steuerventil S verwendet wird. Darüberhinaus ermöglicht der Handhebel H eine manuelle Hubeinstellung des Schieberkolbens K, wobei der Handhebel H um eine Schwenkachse SA schwenkbar am Gehäuse S angeordnet ist. Durch ein Schwenken des Handhebels H um die Schwenkachse SA wird eine in ein am Gehäuse G angeordnetes Hebelgehäuse HG aufgenommene Welle W angetrieben, die mit dem Schieberkolben K durch einen nicht dargestellten Mitnehmer verbunden ist. Somit wird proportional zur Schwenkung des Handhebels H ein Hub des Schieberkolbens K im Gehäuse G manuell eingestellt.

Herkömmlicherweise wird eine Hubbegrenzung des Schieberkolbens K durch ein Anschlagelement AS vorgegeben, das einen Schwenkwinkelbereich des Handhebels H um die Schwenkachse SA festlegt. Durch Vorgabe eines maximalen Schwenkwinkels mittels des Anschlagelements AS wird weiterhin im Gehäuse G ein maximaler Hub des Schieberkolbens K entlang der Längsrichtung L definiert, da jede Hubeinstellung des Schieberkolbens über den Mitnehmer (nicht dargestellt) auf die Welle W übertragen wird und zu einer Schwenkbewegung des Handhebels H entsprechend einer Drehung der Welle W führt, die durch den Mitnehmer (nicht dargestellt) bei einer Hubbewegung des Schieberkolbens K auf die Welle W übertragen wird.

Im Steuerventil S wird ein Volumenstrom durch das Steuerventil S proportional zum Hub des Schieberkolbens K im Gehäuse G eingestellt, woraus sich ergibt, dass die Maximalhubbegrenzung durch das Anschlagelement AS insgesamt einen maximalen Volumenstrom durch das Steuerventil S vorgibt. Insbesondere ist der maximale Volumenstrom unabhängig vom Betriebsmodus, d.h. unabhängig davon, ob die Hubeinstellung über den Handhebel H, den Proportionalmagneten M oder die hydraulische Vorsteuerung V erfolgt. Da der Volumenstrom weiterhin proportional zu einer Ausfahr-, Einfahr- oder Schwenkgeschwindigkeit des angeschlossenen Hydroverbrauchers ist, ergibt sich, dass für einen angeschlossenen Hydroverbraucher eine Maximalgeschwindigkeit unabhängig vom Betriebsmodus vorgegeben wird.

Steuerventile dieser Art sind aus den Druckschriften DE 20216823 U, DE1090133, DE 4130638, US 2012023440, DE 102006052550, GB 524702 und DE 2726341 bereits bekannt.

Es ist nun für einige Anwendungen wünschenswert, abhängig vom Betriebsmodus an einem Hydroverbraucher unterschiedliche Maximalgeschwindigkeiten bereitzustellen.

Hierzu wird in einem ersten Aspekt der Erfindung ein hydraulisches Steuerventil mit den Merkmalen des Anspruchs 1 bereitgestellt.

Abhängig vom Betriebsmodus wird somit ermöglicht, dass in einem dem hydraulischen Steuerventil nachgeschalteten Hydroverbraucher unterschiedliche maximale Arbeitsgeschwindigkeiten vorgegeben sind. Dadurch kann beispielsweise an einem nachgeschalteten Hydroverbraucher auf vorteilhafte Weise ein zweiter Betriebsmodus mit geringerer Arbeitsgeschwindigkeit bereitgestellt werden. Dadurch kann auch eine Hubbegrenzung im manuellen Betrieb unabhängig von einer Hubbegrenzung in einem elektrischen und/oder hydraulischen Betrieb bereitgestellt werden.

In einem zweiten Aspekt der Erfindung wird ein hydraulisches Steuerventil mit den Merkmalen des Anspruchs 2 bereitgestellt.

Alternativ zum ersten Aspekt wird ein hydraulisches Steuerventil mit Antrieben zur Hubeinstellung bereitgestellt, wobei die Antriebe mechanisch entkoppelbar sind und folglich dem Steuerventil nachgeordnete Hydroverbraucher mit unterschiedlichen Maximalgeschwindigkeiten je nach Betriebsmodus betrieben werden können.

Dadurch wird ein von einem elektrischen und/oder hydraulischen Antrieb des Steuerventils entkoppelter manueller Antrieb bereitgestellt.

Dadurch kann auch der Da-Handhebel bei Bedarf mit dem Schieberkolben gekoppelt, werden, während er ansonsten vom Schieberkolben mechanisch entkoppelt ist.

In einer weiteren Ausführungsform ist der Schieberkolben beim Steuerventil über einen Mitnehmer mit einer Welle fest verbunden, über die der Hub mittels des Handhebels im zweiten Betriebsmodus einstellbar ist. Weiterhin ist zwischen der Welle und dem Handhebel eine lösbare Kupplung bereitgestellt. Dies stellt eine vorteilhafte Umsetzung der mechanischen Kopplung zwischen Handhebel und Schieber bereit, wobei der Handhebel nicht unbedingt in unmittelbarer Nähe zum Schieberkolben angeordnet sein muss.

In einer weiteren Ausführungsform weist die lösbare Kopplung beim Steuerventil eine in der Welle gebildete Aussparung auf, in die der Handhebel zur Übertragung eines Drehmoments auf die Welle einkoppelbar ist. Dadurch kann auf einfache und zuverlässige Weise eine Kopplung zur Drehmomentübertragung zwischen Handhebel und Welle bereitgestellt werden.

In einer weiteren Ausführungsform umfasst die lösbare Kopplung beim Steuerventil ein mechanisches Federelement, das derart vorgespannt ist, dass der Handhebel ohne äußere Krafteinwirkung aus der Aussparung herausgedrückt ist. Dadurch wird ein Steuerventil bereitgestellt, bei dem der Handhebel auf einfache Weise bei Bedarf eingekoppelt werden kann.

In einer weiteren Ausführungsform ist der zweite Maximalhub beim Steuerventil durch ein am Gehäuse vorgesehenes Begrenzungselement festgelegt, das die Bewegung des Handhebels relativ zum Gehäuse entsprechend dem zweiten Maximalhub begrenzt. Dies stellt eine einfache und vorteilhafte Hubbegrenzung im manuellen Betriebsmodus bereit.

In einer weiteren Ausführungsform ist die Welle beim Steuerventil in einem am Gehäuse angeordneten Hebelgehäuse gelagert und der Handhebel wird durch ein Aufsatzstück am Hebelgehäuse gehaltert, wobei das Aufsatzstück im ersten Betriebsmodus relativ zur Welle drehbar und im zweiten Betriebsmodus mit der Welle fest verbunden ist. Dies stellt eine einfache Umsetzung des manuellen Antriebs bereit, der eine direkte Nachrüstung bestehender herkömmlicher manueller Antriebe erlaubt.

In einer weiteren Ausführungsform ist das Aufsatzstück beim Steuerventil durch ein Koppelelement mit der Welle lösbar verbunden und der zweite Maximalhub ist durch ein am Hebelgehäuse angeordnete Anschlagelement vorgegebenen, das eine Drehbewegung des Aufsatzstücks um eine durch die Welle definierte Drehachse begrenzt.

In einem dritten Aspekt der Erfindung wird eine Mobilhydraulik mit einem Steuerventil gemäß dem ersten Aspekt oder dem zweiten Aspekt oder einer von weiteren Ausführungsformen und einem nach dem Steuerventil angeordneten Hydroverbraucher, vorzugsweise ein Arbeitszylinder oder eine hydraulischen Winde, bereitgestellt, wobei für den Hydroverbraueher abhängig vom Betriebsmodus des Steuerventils unterschiedliche Maximalgeschwindigkeiten vorgegeben sind.

In einer weiteren Ausführungsform entspricht der zweite Betriebsmodus bei der Mobilhydraulik einem Notbetrieb mit einer durch den zweiten Maximalhub oder den zweiten Antrieb definierten Notgeschwindigkeit des Hydroverbrauchers, die von einer im ersten Betriebsmodus durch den ersten Maximalhub oder den ersten Antrieb vorgegebenen maximalen Betriebsgeschwindigkeit des Hydroverbrauchers verschieden ist.

In einer weiteren Ausführungsform ist der Hydroverbraucher bei der Mobilhydraulik ein Mast- oder Leiterzylinder, durch den eine Stellung eines Masts oder einer Leiter einstellbar ist.

Weitere vorteilhafte Ausgestaltungen der Erfindung zusätzlich zu den vorangehend beschriebenen Aspekten und Ausführungsformen gehen aus den beiliegenden Figuren hervor, wobei ähnliche Bezugszeichen ähnliche Elemente bezeichnen und in denen:
- Fig. 1: ein herkömmliches hydraulisches Steuerventil zeigt;
- Fig. 2a: eine Querschnittansicht eines hydraulischen Steuerventils gemäß der Erfindung zeigt;
- Fig. 2b: eine vergrößerte Schnittdarstellung entlang der Linie A-A in Fig. 2a darstellt; und
- Fig. 2c: eine Aufsicht entlang der Linie B-B in Fig. 2a darstellt.

Die vorliegende Erfindung basiert auf dem Vorschlag, ein in Schieberbauweise ausgebildetes hydraulisches Steuerventil mit Schieberkolben bereitzustellen, wie z. B. ein Proportionalwegeschieberventil, dessen Hub in einem Gehäuse entlang einer Hubrichtung in wenigstens einem ersten Betriebsmodus und einem zweiten Betriebsmodus einstellbar ist. Hierbei wird entweder vorgeschlagen, im ersten und zweiten Betriebsmodus entsprechend festgelegte voneinander verschiedene erste und zweite Maximalhübe vorzusehen, oder alternativ im ersten Betriebsmodus einen ersten Antrieb und im zweiten Betriebsmodus einen zweiten Antrieb bereitzustellen, wobei der erste Antrieb und der zweite Antrieb voneinander mechanisch entkoppelbar sind.

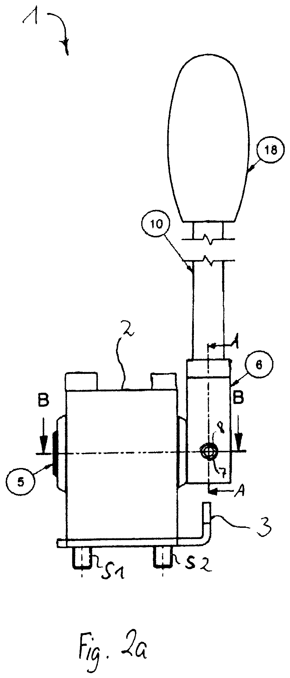

Mit Bezug auf die Figuren 2a bis 2c werden nachfolgend einige anschauliche Ausführungsformen ausführlicher beschrieben.

Fig. 2a zeigt schematisch in einer Querschnittansicht einen manuellen Antrieb 1, der am Gehäuse eines Steuerventils in Schieberbauweise (beispielsweise das Gehäuse G aus Fig. 1) angeordnet werden kann. Der manuelle Antrieb 1 umfasst ein Hebelgehäuse 2, das über Schrauben S1, S2 am Gehäuse (nicht dargestellt) eines Steuerventils (nicht dargestellt) angeordnet werden kann. In das Hebelgehäuse 2 ist eine Welle 5 aufgenommen, durch die eine Schwenkachse des manuellen Antriebs 1 festgelegt wird. In der Darstellung von Fig. 2a verläuft die Schwenkachse entlang der Linie B-B. Die Welle 5 ist im Hebelgehäuse 2 drehbar gelagert und durchsetzt das Hebelgehäuse 2 wenigstens teilweise.

Gemäß der in Fig. 2a dargestellten Ausführungsform ist ferner an einem aus dem Hebelgehäuse 2 austretenden Ende der Welle 5 ein Aufsatzstück 6 vorgesehen, in das die Welle 5 wenigstens teilweise eingeführt ist. In einem Betriebsmodus, in dem in einem (nicht dargestellten) Steuerventil durch den manuellen Antrieb 1 ein Hub einzustellen ist, wird die Welle 5 mit dem Aufsatzstück 6 fest gekoppelt oder damit in Eingriff gebracht. In einem anderen Betriebsmodus, in dem eine Hubeinstellung durch den manuellen Antrieb 1 nicht vorgesehen ist, sind die Welle 5 und das Aufsatzstück 6 relativ zueinander drehbar angeordnet. Weiterhin ist das Aufsatzstück 6 gemäß der Darstellung in Fig. 2a über eine Hebelstange 10 mit einem Handgriff 18 verbunden. Der Handgriff 18 und die Hebelstange 10 bilden einen Handhebel, wie in Fig. 2a dargestellt ist. Alternativ kann der Handhebel ohne Handgriff 18 bereitgestellt werden.

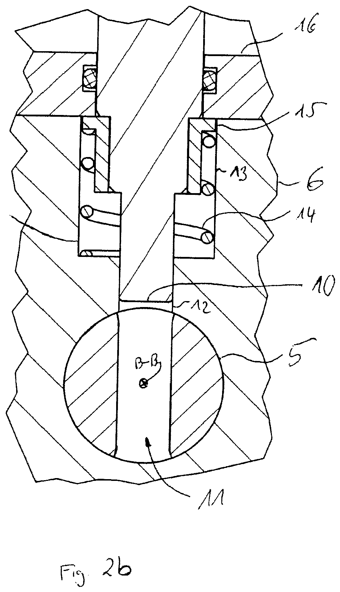

In einigen anschaulichen Ausführungsformen sind das Aufsatzstück 6 und die Welle 5 über ein Koppelelement, beispielsweise einen Stift, einen Bolzen, eine Schraube oder eine Stange, miteinander fest verbindbar, wobei jedoch die feste Verbindung durch das Koppelelement bei Bedarf wieder gelöst werden kann. In dem Fall, in dem das Koppelelement durch den Handhebel bereitgestellt wird (ist hinsichtlich Fig. 2b unten ausführlicher beschrieben) sind die Hebelstange 10 und das Aufsatzstück 6 relativ zueinander beweglich, so dass zwischen der Hebelstange 10 und der Welle 5 eine lösbare Verbindung hergestellt werden kann (vgl. Erläuterungen zu Fig. 2b unten).

Alternativ kann die Hebelstange 10 fest am Aufsatzstück 6 angebracht sein oder die Hebelstange 10 und das Aufsatzstück 6 sind integral gebildet. In diesem Fall stellt die Hebelstange 10 kein Koppelelement dar und das Koppelelement kann durch einen Stift, einen Bolzen, eine Schraube etc. bereitgestellt werden, wobei das Aufsatzstück 6 und die Welle 5 durch das Koppelelement auf lösbare Weise miteinander verbunden werden kann.

Es ist also je nach Betriebsmodus möglich, ein Drehmoment über die Hebelstange 10 an die Welle 5 anzulegen, abhängig davon, ob die Welle 5 relativ zur Hebelstange 10 drehbar oder damit fest verbunden ist.

In einigen beispielhaften Ausführungsformen, in denen die Hebelstange 10 fest am Aufsatzstück angebracht oder integral damit gebildet ist, ist an dem Aufsatzstück 6 eine seitliche Bohrung 7 vorgesehen, in die ein Koppelelement 8 eingeführt ist, etwa eine Schraube, ein Stift, ein Bolzen oder dergleichen. Das Koppelelement 8 kann je nach Eindringtiefe in die Bohrung 7 mit der Welle 5 in Einklang gebracht werden, beispielsweise durch Einschrauben einer Schraube oder Einstecken eines Stifts oder Bolzens in die Bohrung 7, so dass die Welle 5 bezüglich des Aufsatzstücks 6 festgestellt wird. Gemäß einigen anschaulichen Beispielen hierin kann an der Welle 5 eine Eingriffsstruktur (nicht dargestellt), wie z.B. eine Nut oder eine Bohrung vorgesehen sein, die in Ausrichtung zur Bohrung 7 am Aufsatzstück 6 vorgesehen ist, so dass bei fluchtender Ausrichtung der Eingriffsstruktur relativ zur Bohrung 7 das Koppelelement 8 mit der Eingriffsstruktur der Welle in Eingriff gebracht und die Welle 5 bezüglich dem Aufsatzstück 6 festgestellt werden kann.

Mit Bezug auf Fig. 2b werden einige anschauliche Ausführungsformen der Erfindung beschrieben, in denen die Hebelstange 10 das Koppelelement darstellt. Hierbei weist die Welle 5 gemäß der Querschnittdarstellung in Fig. 2b, die bezüglich Fig. 2a entlang der Linie A-A verläuft, eine die Welle 5 wenigstens teilweise radial durchsetzende Aussparung auf, wie z. B. eine Durchgangsbohrung 11. Alternativ kann anstelle der Durchgangsbohrung 11 in der Umfangsoberfläche der Welle 5 eine Nut (nicht dargestellt) oder ein Sackloch (nicht dargestellt) vorgesehen sein. Die Durchgangsbohrung 11 bzw. eine entsprechende Struktur (alternativ eine Nut oder ein Sackloch) können eine verbreiterte Öffnung aufweisen, so dass ein Einführen der Hebelstange 10 in die Durchgangsbohrung 11 (oder die entsprechende Struktur) vereinfacht wird. Es wird angemerkt, dass alternativ zur dargestellten zylindrischen Ausgestaltung des Durchgangsloches 11 dieses einen sich zur Schwenkachse B-B hin radial verjüngenden Querschnitt aufweisen kann.

Die Durchgangsbohrung 11 stellt gegenüber einem Sackloch oder einer Nut den Vorteil bereit, dass ein Eingriff zwischen Hebelstange 10 und Welle 5 an zwei Stellungen der Welle 5 über eine Vollumdrehung der Welle 5 möglich ist. Alternativ können in Umfangsrichtung der Welle 5 mehrere Sacklöcher bzw. Nuten vorgesehen sein. Die mehreren Nuten oder Sacklöcher können z.B. entlang der Umfangsrichtung der Welle 5 gleichmäßig verteilt sein.

Gemäß der in Fig. 2b dargestellten Ausführungsform ist im Aufsatzstück 6 eine Bohrung 12 vorgesehen, die mit der Welle 5 fluchtend in Ausrichtung gebracht werden kann, so dass die in die Bohrung 12 eingeführte Hebelstange 10 bei fluchtender Ausrichtung in die Durchgangsbohrung 11 der Welle 5 eingeführt werden kann. Gemäß dem dargestellten anschaulichen Beispiel weist die Bohrung 12 eine Fortsetzung eines Sacklochs 13 einem Durchmesser auf, der größer ist ein Durchmesser der Bohrung 12. Weiterhin ist im Sackloch 13 eine Feder 14 oder ein anderes elastisches Vorspannelement angeordnet, um die Hebelstange 10 entlang einer Richtung aus der Durchgangsbohrung 11 heraus vorzuspannen. Dazu kann im Sackloch 13 um die Hebelstange 10 ein Hülsenelement 15 angeordnet sein, durch das die Hebelstange 10 durch die Feder 14 aus der Durchgangsbohrung 11 heraus gedrückt wird. Das heißt, dass die Hebelstange 10 erst durch eine die Vorspannungskraft der Feder überschreitende Krafteinwirkung auf die Hebelstange 10 entlang einer Richtung in die Durchgangsbohrung 11 hinein (bei fluchtender Ausrichtung mit der Durchgangsbohrung 11) in die Durchgangsbohrung 11 eingeführt werden kann. Dies stellt den Vorteil bereit, dass der manuelle Antrieb 1 aus Fig. 2a mechanisch von Hubbewegungen eines Schieberkolbens in einem Steuerventil (beispielsweise vom Schieberkolben K im Steuerventil S aus Fig. 1, wenn der mechanische Antrieb 1 anstelle des Handhebels H mit Hebelgehäuse HG in Fig. 1 vorgesehen ist) und erst durch ein aktives Betätigen des manuellen Antriebs 1, d.h. ein aktives Einführen der Hebelstange 10 in die Durchgangsbohrung 11 entgegen der Vorspannung durch die Feder 14, auf einen dem manuellen Antrieb 1 entsprechenden Betriebsmodus des Steuerventils umgeschaltet werden kann.

Wie aus Fig. 2b ersichtlich ist, erfolgt die Vorspannung der Hebelstange 10 aus der Durchgangsbohrung 11 der Welle 5 heraus dadurch, dass sich die Feder 14 im Sackloch 13 gegen den Boden des Sacklochs 13 und das Hülsenelement 15 abstützt. Unter der vorspannenden Krafteinwirkung der Feder 14 auf das Hülsenelement 15 legt sich dieses an ein das Sackloch 13 teilweise abdeckendes Plattenelement 16 an, das an dem Aufsatzstück 6 angebracht ist, beispielsweise auf das Aufsatzstück 6 aufgeschraubt ist. Hierdurch wird eine Halterung der Hebelstange 10 an dem Aufsatzstück 6 gewährleistet, die eine relative Bewegung der Hebelstange 10 zum Aufsatzstück 6 ermöglicht, so dass die Hebelstange 10 lösbar mit der Welle 5 gekoppelt werden kann.

Alternativ kann durch eine invertierte Anordnung des Hülsenelements 15 und der Feder 14 im Sackloch 13 eine auf die Hebelstange 10 einwirkende Vorspannkraft durch die Feder 14 erreicht werden, die die Hebelstange 10 in die Durchgangsbohrung 11 drückt, so dass erst unter Aufwendung einer die Vorspannung der Feder 14 übersteigenden Kraft die Kopplung zwischen der Hebelstange 10 und der Welle 5 gelöst wird. Hierzu wird das Hülsenelement 15 derart im Sackloch angeordnet, dass sich die Feder gegen die Platte 16 abstützt und das Hülsenelement 15 durch die Vorspannkraft der Feder 14 auf den Boden des Sacklochs 13 gedrückt wird. Hierbei kann auch anstelle des Sacklochs 13 eine entsprechende vorspannende Struktur außerhalb des Aufsatzstücks zwischen dem Aufsatzstück 6 und der Hebelstange 10 ausgebildet werden, wie es z.B. für Kugelschreiberminen in Kugelschreibern bekannt ist. Dazu kann eine nicht dargestellte flanschartige Auskragung an der Hebelstange 10 über dem Aufsatzstück 6 vorgesehen sein, auf die eine Vorspannkraft mittels einer außerhalb des Aufsatzstücks 6 angeordneten Feder ausgeübt wird, die je nach Anordnung der Feder bezüglich des Flansches und des Aufsatzstücks 6, gegebenenfalls mit einer außerhalb am Aufsatzstück 6 angebrachten Hülse (nicht dargestellt), eine Vorspannung bereitstellt, die in die Durchgangsbohrung 11 hinein gerichtet oder aus der Durchgangsbohrung 11 heraus gerichtet ist.

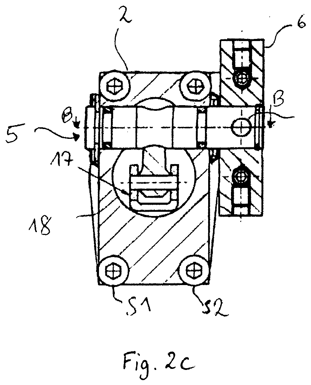

Mit Bezug auf Fig. 2a zusammen mit Fig. 2c wird nachstehend eine Begrenzung des Maximalhubs im manuellen Antrieb 1 beschrieben, die von einer Maximalhubbegrenzung in einem zum manuellen Antrieb 1 alternativen Betriebsmodus bereitgestellt wird.

Fig. 2a zeigt ein Anschlagelement 3, entsprechend dem Anschlagelement AF aus Fig. 1, das einen Schwenkwinkelbereich der Hebelstange 10 um die Schwenkachse B-B herum begrenzt. Abhängig von einer Ausgestaltung des Anschlagelements 3 kann demzufolge ein gewünschter Schwenkwinkelbereich der Hebelstange 10 um die Schwenkachse B-B vorgegeben werden.

Zusätzlich oder alternativ zu der Darstellung in Fig. 2a können federnde Anschlagflächen (nicht dargestellt) vorgesehen werden, die einen gewünschten Schwenkwinkelbereich charakterisieren, beispielsweise durch eine zunehmende Federkraft auf die Hebelstange 10, sobald diese außerhalb eines vorgegebenen Schwenkwinkelbereichs herausgeschwenkt wird, und/oder die Hebelstange 10 in einer gewünschten Orientierung relativ zum Hebelgehäuse 2 haltern.

Fig. 2c stellt schematisch eine Querschnittansicht entlang der Schwenkachse B-B in Fig. 2a in Aufsicht dar. Gemäß der Darstellung in Fig. 2c erstreckt sich die Welle 5 entlang der Schwenkachse B-B durch das Kolbengehäuse 2. An der Welle 5 ist ein Mitnehmer 17 angebracht, der in eine Ausnehmung 18 im Kolbengehäuse 2 aufgenommen ist. Senkrecht zur Schwenkachse B-B und senkrecht zur Darstellungsebene in Fig. 2c setzt sich die Ausnehmung 18 durch das Kolbengehäuse 2 in ein unter dem Kolbengehäuse 2 angeordnetes Gehäuse (nicht dargestellt) eines Steuerventils (nicht dargestellt) fort, wobei der Mitnehmer 17 an einen Schieberkolben (nicht dargestellt) des Steuerventils (nicht dargestellt) angelenkt ist. d.h., dass der Mitnehmer 17 (vgl. Fig. 2c) durch ein Schwenken der Welle 5 um die Schwenkachse B-B (vgl. Fig. 2a, 2c) in der Ausnehmung 18 entlang einer Richtung senkrecht zur Darstellungsebene in Fig. 2c bewegt wird und dabei eine Hubbewegung auf den mit dem Mitnehmer 17 (vgl. Fig. 2c) verbundenen Schieberkolben K (vgl. Fig. 1) ausübt. Hierdurch wird eine Bewegung des Schieberkolbens K (vgl. Fig. 1) entlang der Längsrichtung L bewirkt, so dass ein Hub des Schieberkolbens K (vgl. Fig. 1) abhängig vom Schwenkzustand der Welle 5 (vgl. Fig. 1a, 2c) im Gehäuse G (vgl. Fig. 1) eingestellt wird. Andererseits bedeutet dies, dass eine Verschiebung des Schieberkolbens K (vgl. Fig. 1) im Gehäuse G (vgl. Fig. 1) entlang der Längsrichtung L (vgl. Fig. 1) über den Mitnehmer 17 (vgl. Fig. 2c) zu einer Drehbewegung der Welle 5 (vgl. Fig. 2a, 2c) um die Schwenkachse B-B herum führt. Wird also insbesondere eine Hubeinstellung des Schieberkolbens K (vgl. Fig. 1) durch den Proportionalmagneten M (vgl. Fig. 1) und/oder die hydraulische Vorsteuerung V (vgl. Fig. 1) bewirkt, so führt dies zu einer Drehung der Welle 5 (vgl. Fig. 2a, 2c) um die Schwenkachse B-B (vgl. Fig. 2a, 2c).

Im Rahmen der hinsichtlich der Fig. 2a bis 2c zusammen mit dem in Fig. 1 dargestellten Gehäuse G beschriebenen anschaulichen Ausführungsformen werden beispielhaft hydraulische Steuerventile mit einem ersten Betriebsmodus und mindestens einem zweiten Betriebsmodus bereitgestellt, wobei der Hub eines Schieberkolbens im Steuerventil im zweiten Betriebsmodus durch einen hydraulischen und/oder elektrischen Antrieb (vgl. M und/oder V in Fig. 1) eingestellt werden kann, während der Hub des Schieberkolbens im Steuerventil im ersten Betriebsmodus durch einen manuellen Antrieb (vgl. manuellen Antrieb 1 in Fig. 2a) eingestellt werden kann. Der manuelle Antrieb 1 (vgl. Fig. 2a) ist dabei mechanisch von dem elektrischen und/oder hydraulischen Antrieb (vgl. M und/oder V in Fig. 1) entkoppelbar.

Es wird weiterhin ermöglicht, eine Hubbegrenzung im ersten Betriebsmodus bereitzustellen, die sich von einer Hubbegrenzung im zweiten Betriebsmodus unterscheidet. Insbesondere kann so für jeden Betriebsmodus ein entsprechender Maximalhub vorgegeben werden, der sich vom Maximalhub des oder der anderen Betriebsmoden unterscheidet.

In einigen beispielhaften Ausführungsformen der Erfindung wird weiterhin eine Mobilhydraulik mit einem Steuerventil gemäß den vorangehend beschriebenen anschaulichen Ausführungsformen bereitgestellt, wobei das Steuerventil im Versorgungsstrang vor einem Hydroverbraucher, wie z.B. ein Arbeitszylinder oder eine hydraulische Winde o.ä., angeordnet ist. In speziellen anschaulichen Beispielen können die Hydroverbraucher durch Arbeitszylinder zum Betrieb von Drehleitern, Teleskopmasten, Abstützsystemen, Auslegern usw. von Hubrettungsfahrzeugen, Kränen, Kraftmaschinen usw. eingesetzt werden. In einem konkreten Beispiel kann ein anschaulicher Hydroverbraucher einen Mast- oder Leiterzylinder darstellen, durch den eine Stellung eines Masts oder einer Leiter bzw. eine Schwenkstellung eines Masts oder einer Leiter angefahren werden kann.

In einigen anschaulichen Anwendungen gemäß der vorliegenden Erfindung kann der zweite Betriebsmodus, indem das Steuerventil durch eine hydraulische und/oder elektrische Vorsteuerung gesteuert wird, einen Normalbetrieb bezeichnen. Hierbei kann im Normalbetrieb ein zweiter Maximalhub durch eine zweite Hubbegrenzung im Steuerventil vorgegeben werden, beispielsweise durch geeignete Maßnahmen in der hydraulischen und/oder elektrischen Vorsteuerung, der Geometrie des Ventilgehäuses usw. Weiterhin kann der erste Betriebsmodus einen Notbetrieb darstellen, in dem, beispielsweise bei Ausfall der elektrischen und/oder hydraulischen Vorsteuerung, ein durch das Steuerventil gesteuerter Hydroverbraucher gesteuert wird. Hierbei kann ein vom zweiten Maximalhub verschiedener erster Maximalhub vorgegeben werden, beispielsweise durch geeignete Anschlagselemente, wie hinsichtlich Fig. 2a, 2c vorangehend beschrieben ist, so dass im Notbetrieb beispielsweise eine definierte maximale Notgeschwindigkeit gefahren werden kann, die sich von vorgegebenen maximalen Betriebsgeschwindigkeiten im Normalbetrieb unterscheiden, insbesondere geringer ist als die vorgegebene(n) maximale(n) Geschwindigkeit(en) im Normalbetrieb.

Gemäß beispielhafter Anwendungen der vorliegenden Erfindung können Mobilhydrauliksysteme z.B. Feuerwehrleitern, Ladekräne, Betonpumpen (bei denen elektrisch geregelt schneller gefahren werden darf als im Notbetrieb) usw. umfassen.

Obwohl vorangehend ein manueller Antrieb mit Handhebel und Welle beschrieben ist, die mit einem Schieberkolben eines Steuerventils über einen Mitnehmer verbunden ist, so stellt dies keine Beschränkung dar. Alternativ kann ein Handschieberelement, z. B. ein Gestänge aufweisend, vorgesehen sein, das unmittelbar mit dem Schieberkolben mechanisch koppelbar ist.

Obwohl vorangehend die Hebelstange über das Ansatzstück mit der Welle verbunden werden kann, stellt dies keine Beschränkung dar. Alternativ kann auf das Aufsatzstück verzichtet werden, wobei im Hebelgehäuse eine Öffnung gebildet ist, die senkrecht zur Schwenkachse die Welle freilegt, so dass die Hebelstange durch die Öffnung in das Hebelgehäuse eingeführt werden kann und mit der Welle gekoppelt werden kann. Dazu kann in der Welle eine Öffnung gebildet sein, in die die Hebelstange bei Ausrichtung zur Öffnung eingesteckt werden kann, so dass durch den Hebel ein Drehmoment auf die Welle ausgeübt werden kann. Hierbei gibt eine Breite der Öffnung einen Schwenkwinkelbereich des Hebels vor.

Anhand der vorangehenden Beschreibung der Erfindung ergibt sich zusammenfassend: In einigen Ausführungsformen der vorliegenden Erfindung wird ein hydraulisches Steuerventil in Schieberbauweise mit einem ersten Betriebsmodus und mindestens einem zweiten Betriebsmodus offenbart, wobei ein erster Antrieb zur Hubeinstellung des Schieberkolbens im Steuerventil im ersten Betriebsmodus von einem zweiten Antrieb zur Hubeinstellung des Schieberkolbens im zweiten Betriebsmodus mechanisch entkoppelbar ist. Gemäß anschaulichen Beispielen hierin wird eine von einer elektrischen und/oder hydraulischen Vorsteuerung angetriebenen Hubeinstellung entkoppelte manuelle Hubeinstellung bereitgestellt. In alternativen Ausführungsformen wird ein hydraulisches Steuerventil in Schieberbauweise mit einem Schieberkolben bereitgestellt, dessen Hub in einem Gehäuse entlang einer Hubrichtung in wenigstens einem ersten Betriebsmodus und einem zweiten Betriebsmodus einstellbar ist, wobei sich ein im ersten Betriebsmodus festgelegter erster Maximalhub von einem im zweiten Betriebsmodus festgelegten Maximalhub unterscheidet.

## Patentansprüche

1. Hydraulisches Steuerventil in Schieberbauweise mit einem Schieberkolben, dessen Hub in einem Gehäuse entlang einer Hubrichtung in wenigstens einem ersten Betriebsmodus und einem zweiten Betriebsmodus einstellbar ist, wobei der Hub im ersten Betriebsmodus durch einen Proportionalmagneten und/oder eine hydraulische Vorsteuerung einstellbar ist, während der Hub im zweiten Betriebsmodus durch einen am Gehäuse angeordneten Handhebel (10, 18) manuell einstellbar ist,
**dadurch gekennzeichnet, dass** sich ein im ersten Betriebsmodus festgelegter erster Maximalhub von einem im zweiten Betriebsmodus festgelegten zweiten Maximalhub unterscheidet, wobei der zweite Maximalhub kleiner ist als der erste Maximalhub.

2. Hydraulisches Steuerventil in Schieberbauweise mit einem Schieberkolben, dessen Hub in einem Gehäuse entlang einer Hubrichtung in wenigstens einem ersten Betriebsmodus durch einen ersten Antrieb und in einem zweiten Betriebsmodus durch einen von dem ersten Antrieb verschiedenen zweiten Antrieb (1) einstellbar ist, wobei der erste Antrieb einen Proportionalmagneten und/oder eine hydraulische Vorsteuerung umfasst und der zweite Antrieb (1) einen Handhebel aufweist,
**dadurch gekennzeichnet, dass**
der Handhebel (10, 18) mit dem Schieberkolben mechanisch koppelbar ist, sodass eine Einstellung des Maximalhubs durch den ersten Antrieb von der Einstellung des Maximalhubs durch den zweiten Antrieb (1) mechanisch entkoppelbar ist.

3. Hydraulisches Steuerventil nach Anspruch 1 oder 2, wobei der Schieberkolben über einen Mitnehmer (17) mit einer Welle (5) fest verbunden ist, über die der Hub mittels des Handhebels (10, 18) im zweiten Betriebsmodus einstellbar ist, und zwischen der Welle (5) und dem Handhebel (10, 18) eine lösbare Kupplung bereitgestellt ist.

4. Hydraulisches Steuerventil nach Anspruch 3, wobei die lösbare Kupplung eine in der Welle (5) gebildete Aussparung (11) aufweist, in die der Handhebel (10, 18) zur Übertragung eines Drehmoments auf die Welle (5) einkoppelbar ist.

5. Hydraulisches Steuerventil nach Anspruch 4, wobei die lösbare Kupplung ein mechanisches Federelement (14) umfasst, das derart vorgespannt ist, dass der Handhebel (10, 18) ohne äußere Krafteinwirkung aus der Aussparung (11) herausgedrückt ist.

6. Hydraulisches Steuerventil nach einem der vorhergehenden Ansprüche, wobei der zweite Maximalhub durch ein am Gehäuse vorgesehenes Begrenzungselement (3) festgelegt ist, das die Bewegung des Handhebels (10, 18) relativ zum Gehäuse entsprechend dem zweiten Maximalhub begrenzt.

7. Hydraulisches Steuerventil nach einem der vorhergehendem Ansprüche, wobei die Welle (5) in einem am Gehäuse angeordneten Hebelgehäuse (2) gelagert ist und der Handhebel (10, 18) am Hebelgehäuse (2) durch ein Aufsatzstück (6) gehaltert wird, das im ersten Betriebsmodus relativ zur Welle (5) drehbar und im zweiten Betriebsmodus mit der Welle (5) fest verbunden ist.

8. Hydraulisches Steuerventil nach Anspruch 7, wo bei das Aufsatzstück (6) durch ein Koppelelement mit der Welle (5) lösbar verbunden und der zweite Maximalhub durch ein am Hebelgehäuse (2) angeordnetes Anschlagselement (3) vorgegeben ist, das eine Drehbewegung des Aufsatzstücks (6) um eine durch die Welle (5) definierte Drehachse (B-B) begrenzt.

9. Mobilhydraulik mit einem Steuerventil nach einem der vorhergehenden Ansprüche und einem nach dem Steuerventil angeordneten Hydroverbraucher, vorzugsweise einem Arbeitszylinder oder eine hydraulische Winde, wobei für den Hydroverbraucher abhängig vom Betriebsmodus des Steuerventils unterschiedliche Maximalgeschwindigkeiten vorgegeben sind.

10. Mobilhydraulik nach Anspruch 9, wobei der zweite Betriebsmodus einem Notbetrieb mit einer durch den zweiten Maximalhub oder durch den zweiten Antrieb (1) definierten Notgeschwindigkeit des Hydroverbrauchers entspricht, die von einer im ersten Betriebsmodus durch den ersten Maximalhub oder den ersten Antrieb vorgegebenen maximalen Betriebsgeschwindigkeit des Hydroverbrauchers verschieden ist.

11. Mobilhydraulik nach Anspruch 9 oder 10, wobei der Hydroverbraucher ein Mast- oder Leiterzylinder ist, durch den eine Stellung eines Masts oder einer Leiter einstellbar ist.

## Claims

1. Hydraulic control valve of spool valve design having a spool piston whose stroke in a housing is adjustable along a stroke direction in at least a first operating mode and a second operating mode, the stroke in the first operating mode being adjustable by a proportional solenoid and/or a hydraulic pilot control, while the stroke in the second operating mode is manually adjustable by a hand lever (10, 18) arranged on the housing,
**characterized in that** a first maximum stroke fixed in the first operating mode differs from a second maximum stroke fixed in the second operating mode, the second maximum stroke being smaller than the first maximum stroke.

2. Hydraulic control valve of spool valve design having a spool piston whose stroke in a housing is adjustable along a stroke direction in at least a first operating mode by a first drive and in a second operating mode by a second drive (1) which is different from the first drive, the first drive comprising a proportional solenoid and/or a hydraulic pilot control and the second drive (1) having a hand lever,
**characterised in that**
the hand lever (10, 18) can be mechanically coupled to the spool piston so that a setting of the maximum stroke by the first drive can be mechanically decoupled from the setting of the maximum stroke by the second drive (1).

3. Hydraulic control valve according to claim 1 or 2, wherein the spool piston is fixedly connected via a carrier (17) to a shaft (5) via which the stroke can be adjusted by means of the hand lever (10, 18) in the second operating mode, and a releasable coupling is provided between the shaft (5) and the hand lever (10, 18).

4. Hydraulic control valve according to claim 3, the releasable coupling having a recess (11) formed in the shaft (5), into which the hand lever (10, 18) can be coupled for transmitting a torque to the shaft (5).

5. Hydraulic control valve according to claim 4, wherein the releasable coupling comprises a mechanical spring element (14) which is preloaded so that the hand lever (10, 18) is pressed out of the recess (11) without external force.

6. Hydraulic control valve according to one of the preceding claims, the second maximum stroke being defined by a limiting element (3) provided on the housing which limits the movement of the hand lever (10, 18) relative to the housing corresponding to the second maximum stroke.

7. Hydraulic control valve according to one of the preceding claims, the shaft (5) being supported in a lever housing (2) disposed on the housing and the hand lever (10, 18) being held on the lever housing (2) by an attachment piece (6) which is rotatable relative to the shaft (5) in the first operating mode and fixedly connected to the shaft (5) in the second operating mode.

8. Hydraulic control valve according to claim 7, wherein the the attachment piece (6) is detachably connected to the shaft (5) by a coupling element and the second maximum stroke is predetermined by a stop element (3) which is arranged on the lever housing (2) and that limits a rotational movement of the attachment piece (6) about an axis of rotation (B-B) defined by the shaft (5).

9. Mobile hydraulics having a control valve according to one of the preceding claims and a hydraulic consumer arranged downstream of the control valve, preferably a working cylinder or a hydraulic winch, wherein different maximum speeds being predetermined for the hydraulic consumer depending the operating mode of the control valve.

10. Mobile hydraulics according to claim 9, wherein the second operating mode corresponds to an emergency operation with an emergency speed of the hydraulic consumer defined by the second maximum stroke or by the second drive (1) which is different from a maximum operating speed of the hydraulic consumer predetermined in the first operating mode by the first maximum stroke or by the first drive.

11. Mobile hydraulics according to claim 9 or 10, wherein the hydraulic consumer is a mast cylinder or a ladder cylinder through which a position of a mast or ladder can be adjusted.

## Revendications

1. Valve de contrôle hydraulique du type à tiroir comprenant un tiroir dont la course dans un boîtier est réglable le long d'une direction de course dans au moins un premier mode opérationnel et un second mode opérationnel, la course étant réglable par un solénoïde proportionnel et/ou un pilotage hydraulique dans le premier mode opérationnel, tandis que la course étant réglable manuellement par une manette (10, 18) disposée sur le boîtier dans le second mode opérationnel,
**caractérisée en ce qu'une** première course maximale spécifiée dans le premier mode opérationnel diffère d'une seconde course maximale spécifiée dans le second mode opérationnel, ladite seconde course maximale étant inférieur à ladite première course maximale.

2. Valve de contrôle hydraulique du type à tiroir comprenant un tiroir dont la course dans un boîtier est réglable le long d'une direction de course dans au moins un premier mode opérationnel par un premier entraînement et dans un second mode opérationnel par un second entraînement (1) qui est distinct dudit premier entraînement, ledit premier entraînement comprenant un solénoïde proportionnel et/ou un pilotage hydraulique et ledit second entraînement (1) comprenant une manette
**caractérisée en ce que**
ladite manette (10, 18) étant apte à être couplée mécaniquement audit tiroir de sorte que le réglage de la course maximale par ledit premier entraînement peut être découplée mécaniquement du réglage de la course maximale par ledit second entraînement (1).

3. Valve de contrôle hydraulique selon la revendication 1 ou 2, dans laquelle le tiroir est couplé de façon fixe via un entraîneur (17) à un arbre (5) par lequel la course est réglable dans ledit second mode opérationnel moyennant la manette (10, 18), et
un couplage séparable est prévu entre ledit arbre (5) et ladite manette (10, 18).

4. Valve de contrôle hydraulique selon la revendication 3, dans laquelle ledit couplage séparable comprend un évidemment (11) qui est formé dans l'arbre (5) et dans lequel la manette (10, 18) peut être insérée pour transmettre un moment de couple à l'arbre (5).

5. Valve de contrôle hydraulique selon la revendication 4, dans laquelle ledit couplage séparable comprend un élément mécanique de ressort (14) qui est mis en précontrainte de sorte que sans application d'une force externe la manette (10, 18) se trouve sortie en dehors dudit évidemment (11).

6. Valve de contrôle hydraulique selon l'une quelconque des revendications précédentes, dans laquelle ladite seconde course maximale est spécifiée par un élément de limitation (3) prévu sur ledit boîtier, ledit élément de limitation (3) limitant le mouvement de la manette (10, 18) par rapport au boîtier correspondant à ladite seconde course maximale.

7. Valve de contrôle hydraulique selon l'une quelconque des revendications précédentes, dans laquelle ledit arbre (5) est supporté par un boîter de manette (2) disposé sur ledit boîter, et ladite manette (10, 18) est supportée sur ledit boîter de manette (2) par une pièce attachée (6) qui dans le premier mode opérationnel est mobile en rotation par rapport à l'arbre et dans le second mode opérationnel est fixe par rapport à l'arbre.

8. Valve de contrôle hydraulique selon la revendication 7, dans laquelle ladite pièce attachée (6) est couplée audit arbre (5) de façon séparable et ladite seconde course maximale est spécifiée par une butée (3) qui est disposée sur ledit boîter de manette (2) et qui limite le mouvement de rotation de ladite pièce attachée (6) autour d'un axe de rotation (B-B) défini par l'arbre (5).

9. Installation hydraulique mobile comprenant une valve de contrôle selon l'une quelconque des revendications précédentes et un consommateur hydraulique disposé en aval de ladite valve de contrôle, de préférence un vérin ou un treuil hydraulique, des vitesses maximales différentes étant spécifiées pour le consommateur hydraulique en fonction du mode opérationnel de ladite valve de contrôle.

10. Installation hydraulique mobile selon la revendication 9, dans laquelle le second mode opérationnel correspond à un service d'urgence présentant une vitesse d'urgence dudit consommateur hydraulique définie par ladite seconde course maximale ou par ledit second entraînement (1), ladite vitesse d'urgence étant différente de la vitesse maximale d'opération dudit consommateur hydraulique spécifiée dans ledit premier mode opérationnel par ladite première course maximale ou par ledit premier entraînement.

11. Installation hydraulique mobile selon la revendication 9 ou 10, dans laquelle le consommateur hydraulique est un vérin d'un mât ou d'une échelle qui est apte à régler une position d'un mât ou d'une échelle.
